# NEUE EUROPÄISCHE PATENTSCHRIFT

(11) **EP 3 289 852 B2**
(45) Veröffentlichungstag und Bekanntmachung des Hinweises auf die Entscheidung über den Einspruch: **12.06.2024**
(45) Hinweis auf die Patenterteilung: 26.06.2019
(21) Anmeldenummer: 17160539.7
(22) Anmeldetag: 13.03.2017
(51) Int. Cl.: A01D 41/12, A01D 43/073, A01D 43/08

(54) **TRANSPORTFAHRZEUG**
TRANSPORT AUTOMOBILE
VÉHICULE DE TRANSPORT

(30) Priorität: 29.08.2016 DE 102016116043
(43) Veröffentlichungstag der Anmeldung: 07.03.2018
(73) Patentinhaber: CLAAS Selbstfahrende Erntemaschinen GmbH, 33428 Harsewinkel (DE)
(72) Erfinder: Escher, Matthias, 49179 Ostercappeln (DE)
(74) Vertreter: Bauer Wagner Pellengahr Sroka

(56) Entgegenhaltungen:
- EP-A1- 1 344 445
- EP-A1- 1 344 445
- EP-A1- 3 053 428
- EP-A2- 1 332 659
- EP-A2- 2 829 171
- WO-A1-2013/025687
- DE-A1-102011 052 688
- US-A1- 2014 311 113
- H. Kurila et al., Application of image processing technology for unloading automation of robotic head-feeding combine harvester. Engineering in Agriculture.Environment and Food(EAEF) 5(4) p 146-151,2012
- Graefe, Fabian, "Stereoskopische Ladeflachenerkennung undFullstandsmessung am Beispiel von HackselgurTechnischen Universitat Carolo-Wilhelmina zu Braunschweig,03 December 2007

## Beschreibung

Die Erfindung betrifft ein Transportfahrzeug mit einem Ladebehälter gemäß dem Oberbegriff von Anspruch 1, eine Erntemaschine gemäß dem Oberbegriff von Anspruch 9, ein System gemäß dem Oberbegriff von Anspruch 12 sowie ein Verfahren zum Befüllen eines Transportfahrzeugs gemäß dem Oberbegriff von Anspruch 14.

Aus dem Stand der Technik sind verschiedene Transportfahrzeuge und Erntemaschinen bekannt, mit denen Erntegut überladen werden kann.

In der europäischen Patentschrift EP 2 020 174 B1 ist beispielsweise ein Verfahren beschrieben, bei dem eine Kamera während des Überladevorgangs die Überladevorrichtung und das Transportfahrzeug erfasst und der Überladevorgang zumindest teilweise steuert.

Ferner ist es aus der noch nicht veröffentlichten deutschen Patentanmeldung DE 10 2015 109 799 bekannt, ein Transportfahrzeug seitlich mit einem Identifikator zu versehen, welcher mit einer Kamera erfasst und basierend auf dem Identifikator der Überladevorgang gesteuert wird.

Zudem ist es aus dem Stand der Technik gemäß DE 102011 052688 bekannt, eine Seitenwand des Transportfahrzeugs mit Identifikatoren zu versehen, die mittels Kamera erfassbar sind und wobei eine Steuereinrichtung ein Abstandssignal generiert, welches zur Steuerung des Abstandes der nebeneinander fahrenden Fahrzeuge, hier Erntemaschine und Transportbehälter, herangezogen wird.

Nachteilig an den bekannten Überladevorgängen ist, dass bei schlechten Lichtverhältnissen und starker Staubaufwirbelung die Ränder der Öffnung eines Ladebehälters eines Transportfahrzeugs nicht immer exakt erkannt werden können. Dies führt dazu, dass der Ladebehälter, insbesondere in seinen Randbereichen, unter widrigen Bedingungen, wie bei schlechten Lichtverhältnissen und starker Staubentwicklung, nicht sicher teilautomatisiert oder automatisiert befüllt werden kann, so dass insbesondere auch der Fahrer der Erntemaschine ggf. zusätzlich zur Erntefahrt den Überladevorgang steuern und/oder überwachen muss.

Der Erfindung liegt das Problem zugrunde, das bekannte Transportfahrzeug in der Art auszugestalten und weiterzubilden, dass ein robuster und sicherer Überladevorgang auch bei schlechten Lichtverhältnissen und größeren Staubaufwirbelungen sicher möglich ist.

Das obige Problem wird bei einem Transportfahrzeug gemäß dem Oberbegriff von Anspruch 1 durch die Merkmale des kennzeichnenden Teils von Anspruch 1 gelöst.

Wesentlich ist die grundsätzliche Überlegung, an der Ladebehälteranordnung in deren oberseitigen Endbereich mindestens einen Identifikator in der Art zu applizieren, dass er den Einfüllbereich für die Steuerung kennzeichnet und, insbesondere von oben, mittels einer Überladekamera erfassbar ist.

Das Kennzeichen des Einfüllbereichs mit einem Identifikator ermöglicht eine deutlich robustere Erfassung des Einfüllbereichs durch die Steuerung mittels der Überladekamera. Der Einfüllbereich muss, wenn ein Identifikator appliziert ist, nicht mehr anhand von verschiedensten abgelegten Hängergeometrien erkannt und bei schlechten Lichtverhältnissen auf der Basis von geringen Konturkontrasten von der Steuerung erfasst werden. Es kann vielmehr auf einfache Art und Weise bei schlechten Lichtverhältnissen und für Ladebehälter unterschiedlichster Bauart durch das einfache Applizieren der Identifikatoren bauartunabhängig eine sichere Erfassung des Einfüllbereichs durch die Steuerung mittels der Überladekamera und somit ein stabiler und robuster Überladevorgang gewährleistet werden.

Auch Lackabrieb und/oder Verschmutzung des Ladebehälters des Transportfahrzeugs, welche zu einer verschlechterten Konturerfassung des Einfüllbereichs der Ladebehälteranordnung führen können, führen nicht zu einer verschlechterten Erfassung des Einfüllbereichs, da dieser mit Hilfe des Identifikators sicher erfassbar ist.

Gemäß einer weiteren Ausgestaltung der Erfindung entsprechend Anspruch 2 wird vorgeschlagen, dass der Einfüllbereich eine, insbesondere nach oben gerichtete, Öffnung des Ladebehälters ist und/oder dass die Ladebehälteranordnung eine Beladevorrichtung aufweist und der Einfüllbereich ein Beladeeinfüllbereich der Beladevorrichtung ist.

In der Weiterbildung gemäß Anspruch 3 wird vorgeschlagen, dass an der Ladebehälteranordnung in deren obenseitigen Endbereich zwei Identifikatoren, insbesondere an einer ihrer Längsseiten, in der Art appliziert sind, dass sie den Einfüllbereichfür die Steuerung kennzeichnen und, insbesondere von oben, mittels der Überladekamera erfassbar sind. Vorzugsweise sind an der Ladebehälteranordnung in deren obenseitigen Endbereich sogar vier Identifikatoren, insbesondere je zwei an ihren Längsseiten, in der Art appliziert, dass sie den Einfüllbereich für die Steuerung kennzeichnen und, insbesondere von oben, mittels der Überladekamera erfassbar sind. Das Vorsehen der zusätzlichen Identifikatoren verbessert die Erfassung des Einfüllbereichs weiter. Bevorzugt kennzeichnen den Einfüllbereich mindestens drei Identifikatoren 5.

Gemäß Anspruch 4 wird vorgeschlagen, dass seitlich an dem Ladebehälter weitere Identifikatoren angeordnet sind. Diese können zum Steuern des Überladevorgangs und damit der Synchronisation des Transportfahrzeugs mit einer Ernte- und/oder Verlademaschine verwendet werden, wie dies in der deutschen Patentanmeldung DE 10 2015 109 799 beschrieben ist.

Um die Erfassung des Einfüllbereichs bzw. der Identifikatoren weiter zu verbessern, ist erfindungsgemäß vorgesehen, dass die Identifikatoren ein Muster mit Hell-Dunkel-Kontrast zur Erfassung mittels der Überladekamera aufweisen. Hierbei kann es sich insbesondere um ein Schachbrettmuster vorzugsweise mit schwarzen und weißen Flächen handeln.

Weiter vorzugsweise gibt der Identifikator oder die Kombination aus zwei Identifikatoren die Lage des Einfüllbereichs relativ zum Identifikator bzw. der Kombination der zwei Identifikatoren an. Weiter vorzugsweise geben sämtliche Identifikatoren einzeln oder in Kombination die Lage und gegebenenfalls zusätzlich die Dimensionen der Öffnung an.

Die Ansprüche 6 und 9 beschreiben weitere bevorzugte Ausgestaltungen bzw. bevorzugte Anordnungen der Identifikatoren.

Gemäß Anspruch 8 wird vorgeschlagen, ein Identifikator eine Positionsinformation, insbesondere auf welcher Kante er angeordnet ist, und/oder eine Überladeinformation, insbesondere einen Sicherheitsbereich zum Rand und/oder eine maximale Füllhöhe und/oder ein maximal zulässiges Beladegewicht und/oder eine Befüllstrategie, und/oder eine Ladebehälteridentifikationsinformation umfasst, und dass die Positionsinformation und/oder Überladeinformation und/oder Ladebehälteridentifikationsinformation durch die Überladekamera auslesbar ist. Eine Befüllstrategie kann beispielsweise sein, der Überladevorgang in der Art gesteuert wird, dass der Ladebehälter zunächst im Bereich einer Deichsel des Transportfahrzeugs beladen wird und anschließend der Ladebehälter von hinten nach vorne beladen wird.

Für eine Erntemaschine oder eine Verlademaschine wird das obige Problem gemäß dem Oberbegriff von Anspruch 9 durch die Merkmale des Kennzeichens von Anspruch 9 gelöst.

Es ergeben sich die gleichen Vorteile wie vorstehend bereits im Zusammenhang mit dem Transportfahrzeug beschrieben. Der Überladevorgang kann nun von der Erntemaschine basierend auf dem erfassten Identifikator bzw. den erfassten Identifikatoren zumindest teilautomatisiert gesteuert werden. gelöst.

Vorzugsweise ist gemäß Anspruch 10 die Überladekamera an der Überladevorrichtung, insbesondere dem Überladerohr, angeordnet. Hierdurch kann eine gute Erfassung der Identifikatoren im obenseitigen Endbereich des Ladebehälters ermöglicht werden.

Die Erntemaschine bzw. die Verlademaschine kann gemäß der Weiterbildung gemäß Anspruch 11 eine weitere Kamera zur Erfassung von seitlich am Ladebehälter angeordneten weiteren Identifikatoren aufweisen. Dies ermöglicht eine weitere bessere Steuerung des Überladevorgangs, insbesondere der Erntemaschine bzw. der Verlademaschine und/oder des Transportfahrzeugs. Während des Überladevorgangs sind seitlich am Transportfahrzeug und/oder Ladebehälter angebrachte weitere Identifikatoren von der Staubentwicklung während des Überladevorgangs nicht so stark betroffen, so dass beispielsweise die Synchronisation der Geschwindigkeiten von Erntemaschine bzw. Verlademaschine und Transportfahrzeug auf diese Weise verbessert werden kann.

Ferner wird die eingangs genannte Aufgabe bei einem System gemäß dem Oberbegriff von Anspruch 12 durch die Merkmale des Kennzeichens von Anspruch 12 gelöst.

Es ergeben sich die gleichen Vorteile wie zuvor in Verbindung mit dem Transportfahrzeug und/oder der Erntemaschine bzw. der Verlademaschine beschrieben. Vorzugsweise weist das System die in Zusammenhang mit dem Transportfahrzeug, der Erntemaschine bzw. der Verlademaschine beschriebenen Merkmale einzeln oder in Kombination auf.

Durch eine Weiterbildung des Systems gemäß Anspruch 134 wird die Robustheit des Überladevorgangs weiter gesteigert.

Schließlich wird die eingangs genannte Aufgabe verfahrensmäßig bei einem Verfahren gemäß dem Oberbegriff von Anspruch 14 durch die Merkmale des kennzeichnenden Teils von Anspruch 14 gelöst.

Es ergeben sich die gleichen Vorteile wie vorstehend bereits im Zusammenhang mit dem Transportfahrzeug, der Erntemaschine bzw. der Verlademaschine, und dem System beschrieben. Vorzugsweise wird zur Durchführung des Verfahrens das Transportfahrzeug und/oder die Erntemaschine bzw. die Verlademaschine und/oder das System verwendet.

Im Folgenden wird die Erfindung anhand einer lediglich Ausführungsbeispiele darstellenden Zeichnung näher erläutert. In der Zeichnung zeigt
- Fig. 1: ein vorschlagsgemäßes Transportfahrzeug und eine vorschlagsgemäße Erntemaschine während des Überladevorgangs,
- Fig. 2: einen Ladebehälter während des Überladevorgangs in einer dreidimensionalen Ansicht
- Fig. 3: ein weitere Ausführungsbeispiel eines vorschalgsgemäßen Transportfahrzeugs und einer vorschlagsgemäßen Erntemaschine während des Überladevorgangs.

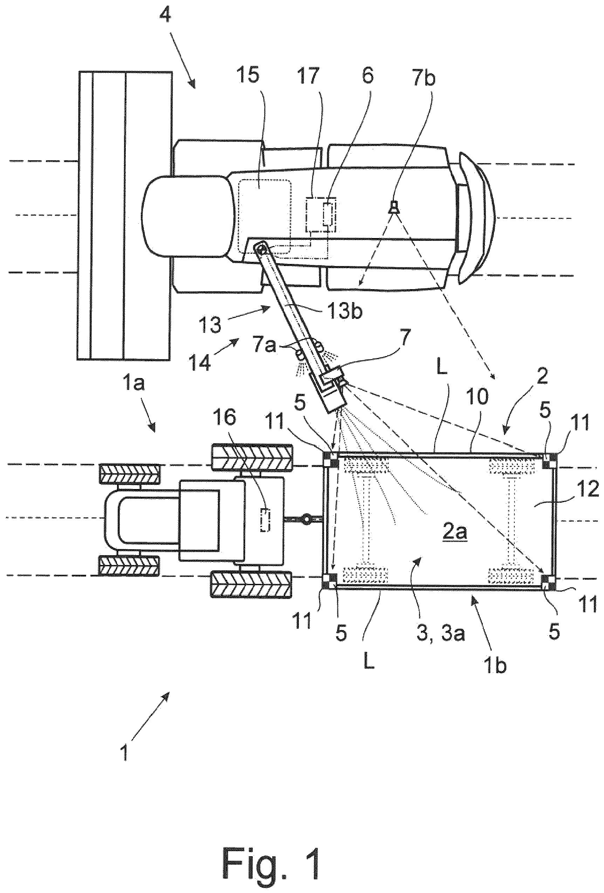

In der Fig. 1 ist ein vorschlagsgemäßes Transportfahrzeug 1 mit einer Ladebehälteranordnung 2 mit einem Ladebehälter 2a gezeigt. Die Ladebehälteranordnung 2 weist einen, insbesondere nach oben gerichteten Einfüllbereich 3 zum Befüllen des Ladebehälters 2a mit Erntegut durch eine Erntemaschine 4 oder eine Verlademaschine auf.

In der nachfolgenden Beschreibung wird um das Verständnis zu erleichtern der Begriff "Erntemaschine" stellvertretend auch für eine "Verlademaschine" verwendet. Dies ist nicht beschränkend zu verstehen. Vielmehr gelten die Ausführungen zu einer Erntemaschine auch für eine Verlademaschine.

Hier ist das Transportfahrzeug 1 selbstfahrend ausgebildet, d. h. es weist einen eigenen Antrieb zum selbsttätigen Fortbewegen auf. Im Ausführungsbeispiel der Fig. 1 ist das Transportfahrzeug 1 als Gespann ausgebildet. Es weist hier und vorzugsweise eine Zugmaschine 1a und einen Anhänger 1b auf. Gemäß einer alternativen Ausgestaltung der Erfindung, welche ebenfalls mit umfasst ist, kann das Transportfahrzeug 1 jedoch auch nicht selbstfahrend ausgebildet sein, also beispielsweise als Anhänger 1b ausgebildet sein. Zur Verwirklichung des Überladevorgangs kann dieser dann beispielsweise von einer Zugmaschine 1a, welche gemäß einer solchen Definition nicht Bestandteil des Transportfahrzeugs 1 ist, während der Durchführung des Überladevorgangs gezogen werden.

Vorzugsweise wird die Erntemaschine 4 selbstfahrend ausgebildet sein, auch diese kann ebenso wie das Transportfahrzeug 1 jedoch nicht selbstfahrend ausgebildet sein und beispielsweise von einer Zugmaschine gezogen werden.

Im Ausführungsbeispiel werden das Transportfahrzeug 1 und die Erntemaschine 4 durch einen Fahrer geführt. Es ist jedoch auch denkbar, dass diese fahrerlos geführt werden oder eine derselben fahrerlos geführt ist.

Die Ladebehälteranordung 2 weist vorschlagsgemäß mindestens einen, insbesondere universell einsetzbaren, Identifikator 5 auf. Dieser ist zum zumindest teilautomatisierten Steuern des Überladevorgangs durch eine Steuerung 6 mittels einer Überladekamera 7 erfassbar. Vorschlagsgemäß ist an dem obenseitigen Endbereich der Ladebehälteranordung 2 der mindestens eine, insbesondere universell einsetzbare, Identifikator 5 in der Art appliziert, dass er den Einfüllbereich 3 für die Steuerung 6 kennzeichnet und, insbesondere von oben, mittels der Überladekamera 7 erfassbar ist. Unter "universell einsetzbar" ist hier vorzugsweise zu verstehen, dass der Identifikator 5 auf unterschiedlichste Art und Weise an verschiedene Transportfahrzeuge 1 unabhängig von ihrer Bauart applizierbar ist. Er ist nach Art seiner Ausgestaltung fahrzeugunabhängig. Eine Rahmen- oder Randstruktur 8 eines Anhängers 1b bzw. eines Ladebehälters 2 als solche stellt somit keinen universell einsetzbaren Identifikator 5 dar. Der Identifikator 5 weist hier und vorzugsweise vielmehr eine Struktur und/oder ein Muster auf, durch welches er von der Steuerung 6 mittels einer Überladekamera 7 erkannt werden kann, und zwar unabhängig von der Bauart und/oder Bauform des Transportfahrzeugs 1 bzw. Ladebehälters 2 als solchen.

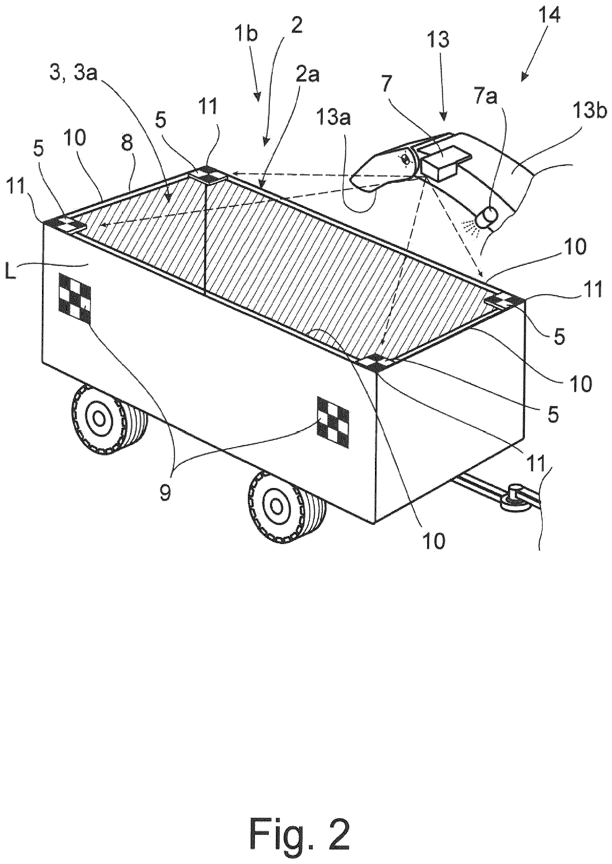

Der Einfüllbereich 3 kann eine, insbesondere nach oben gerichtete, Öffnung 3a des Ladebehälters 2a sein, wie dies in den Ausführungsbeispielen der Fig. 1 und 2 der Fall ist. Zusätzlich oder alternativ kann die Ladebehälteranordnung 2 jedoch auch eine Beladevorrichtung 2b zur Entgegennahme von Erntegut aufweisen und der Einfüllbereich 3 ein Beladeeinfüllbereich 3b der Beladevorrichtung 2b sein. Der Beladeeinfüllbereich 3b bildet dabei einen Eingang der Beladevorrichtung 2b für das Erntegut. Ferner weist die Beladevorrichtung 2b einen Ausgang auf, welcher in den Ladebehälter 2a führt.

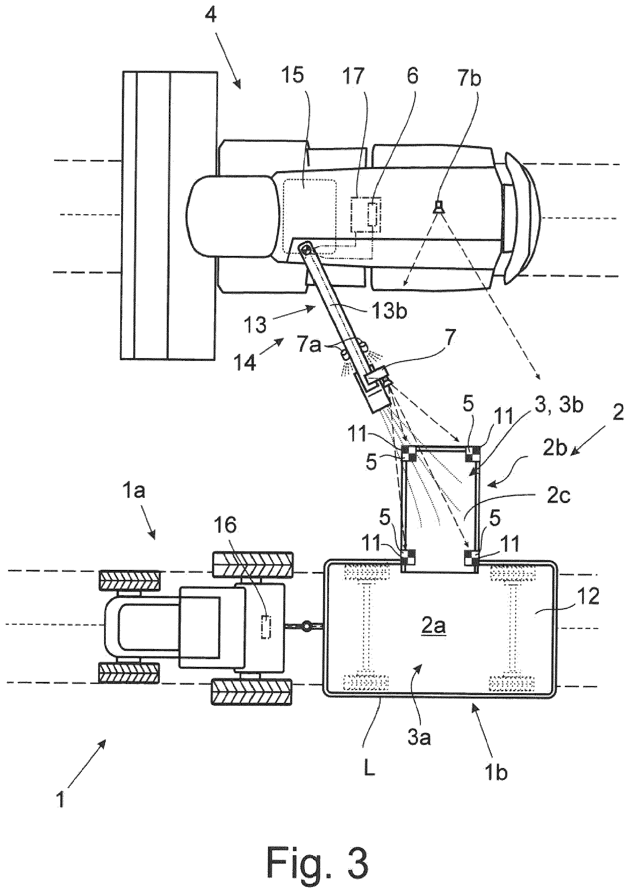

Die Beladevorrichtung 2b erstreckt sich, insbesondere quer zur Fahrtrichtung des Transportfahrzeugs 1, von dem Ladebehälter 2a weg. Die Öffnung 3a des Ladebehälters 2a und der Beladeeinfüllbereich 3b können sich dabei überlappen, vgl. Fig. 3, oder voneinander getrennt sein.

Die Beladevorrichtung 2b weist vorzugsweise eine Fördervorrichtung 2c zum Fördern von übergebenen Erntegut aus dem Beladeeinfüllbereich 3b in den Ladebehälter 2a auf, vgl. Fig. 3. Die Fördervorrichtung 2c kann einen Antrieb zum Fördern des Ernteguts von dem Beladeeinfüllbereich 3b in den Ladebehälter 2a aufweisen. Der Antrieb kann ein Rüttelantrieb und/oder ein Schneckenantrieb und/oder ein Förderband sein. Zusätzlich oder alternativ kann die Beladevorrichtung 2b auch eine schiefe Ebene aufweisen, über welche das Erntegut in den Ladebehälter 2a rutscht.

Hier und vorzugsweise ist die Beladevorrichtung 2b entlang des Ladebehälters 2a verfahrbar, dies insbesondere entlang einer Längsachse des Ladebehälters 2a. Zusätzlich oder alternativ kann die Beladevorrichtung 2b gegenüber dem Ladebehälter 2a schwenkbar ausgebildet sein. Hierdurch kann die Breite der Ladebehälteranordnung 2, insbesondere für eine Transportfahrt, reduziert werden.

An der Ladebehälteranordnung 2 sind vorzugsweise in deren obenseitigen Endbereich zwei Identifikatoren 5, insbesondere an einer ihrer Längsseiten L, in der Art appliziert, dass sie die Öffnung für die Steuerung 6 kennzeichnen und von oben mittels der Überladekamera 7 erfassbar sind. Hier und vorzugsweise sind, wie in den Fig. 1 und 2 gezeigt, an der Ladebehälteranordnung 2 in deren obenseitigen Endbereich vier Identifikatoren 5, insbesondere je zwei an ihrer Längsseiten L, in der zuvor beschriebenen Weise appliziert. Besonders bevorzugt kennzeichnen die Identifikatoren 5 den Einfüllbereich längs und quer zur Fahrtrichtung des Transportfahrzeugs. Hierdurch kann die Steuerung die Grenzen des Einfüllbereichs 3 durch das Erfassen der Identifikatoren 5 längs und quer zur Fahrtrichtung des Transportfahrzeugs, insbesondere über die Überladekamera, erfassen und vorzugsweise in Abhängigkeit hiervon den Überladevorgang zumindest teilautomatisiert steuern.

Um eine weitere Optimierung des Überladevorgangs zu erreichen, können seitlich an den Ladebehälter 2a weitere Identifikatoren 9 angeordnet sein. Sie ermöglichen eine bessere Synchronisation der Erntemaschine 4 mit dem Transportfahrzeug 1 während eines Überladevorgangs. Die weiteren Identifikatoren 9 können gleich oder unterschiedlich zu den Identifikatoren 5 ausgebildet sein. Hier und vorzugsweise umfassen die weiteren Identifikatoren Informationen nach Art einer Signatur, beispielsweise in der Form eines QR-Codes oder eines Barcodes. Dies ist in der DE 10 2015 109 799 beschrieben und wird durch Verweis zum Gegenstand dieser Anmeldung gemacht.

Die Erfassungssicherheit und damit die Robustheit des Überladevorgangs wird erfindungsgemäß gesteigert, indem die Identifikatoren 5 ein Muster mit Hell-/Dunkel-Kontrast zur Erfassung mittels der Überladekamera 7 aufweisen. Hier hat sich insbesondere eine abwechselnde Anordnung von hellen und dunklen Feldern, insbesondere weißen und schwarzen Feldern, welche vorzugsweise aus Rechtecken gebildet werden, bewährt. In den Fig. 1 und 2 ist das Muster als Schachbrettmuster ausgebildet. Es weist hier und vorzugsweise vier Felder auf. Diese bilden hier wie in Fig. 1 und 2 gezeigt ein Quadrat.

Um eine sichere Erfassung der Identifikatoren 5 zu gewährleisten, weisen die Felder mindestens eine Kantenlänge von 2 cm, weiter vorzugsweise von mindestens 3 cm, insbesondere von mindestens 5 cm auf.

Vorzugsweise gibt ein Identifikator 5 oder gibt, wie im Ausführungsbeispiel, die Kombination aus zwei Identifikatoren 5 die Lage des Einfüllbereichs 3 relativ zu dem Identifikator 5 bzw. zu der Kombination der zwei Identifikatoren 5 an. Im Ausführungsbeispiel erfolgt dies durch die Anordnung der dunklen Felder des Musters. Sie weisen bei der Kombination zweier Identifikatoren 5 hier mit ihrer Schnittrichtung Richtung Einfüllbereich 3.

Wie der Fig. 2 entnommen werden kann, sind die Identifikatoren bevorzugt oben auf den Ladebehälter 2a insbesondere an einem Rand 10 des Ladebehälters 2a angeordnet. Sie sind hier und vorzugsweise breiter als der Rand 10 des Ladebehälters 2a ausgebildet. Vorzugsweise sind die Identifikatoren 5 mindestens doppelt, vorzugsweise dreimal, so breit wie ein Rand 10 des Ladebehälters 2a ausgebildet. Insbesondere kann ein Identifikator 5 mindestens doppelt, vorzugsweise dreimal, so breit wie ein Rand 10 des Ladebehälters 2a ausgebildet sein, an dem der Identifikator 5 befestigt ist.

Die Identifikatoren 5 sind erfindungsgemäß in oder auf den Ecken 11 des Einfüllbereichs 3 der Ladebehälteranordnung 2, insbesondere der Öffnung 3a des Ladebehälters 2a, angeordnet. Hier kennzeichnen die Identifikatoren 5 den Einfüllbereich 3 der Ladebehälteranordnung 2 also vorzugsweise in Form und/oder Lage. Ferner können die Identifikatoren 5 flach ausgebildet sein. Bevorzugt sind die Identifikatoren 5 im Wesentlichen parallel und/oder senkrecht zum Behälterboden 12 des Ladebehälters 2 angeordnet. Auch können sie auf unterschiedlichste Art und Weise an dem Ladebehälter 2a in dessen insbesondere obenseitigen, Endbereich appliziert sein.

Die Identifikatoren 5 können als Aufkleber ausgebildet sein, welche auf der Ladebehälteranordnung 2 aufgebracht werden. Dadurch lässt sich dieser auf besonders einfach Art erneuern, falls er beschädigt wurde. Erfindungsgemäß können sie separat von der Ladebehälteranordnung 2 ausgebildet und an diesem, insbesondere lösbar, befestigt sein. Beispielsweise können sie geschraubt oder gemäß einer besonders bevorzugten Ausgestaltung magnetisch an der Ladebehälteranordnung 2 befestigt werden. In diesem Fall können die Identifikatoren 5 für den Einsatz an unterschiedlichen Transportfahrzeugen 1 befestigt werden.

Um den Identifikator 5 zu schützen, kann dieser mit einer transparenten Schutzfolie versehen sein. Die Schutzfolie ist vorzugsweise so ausgelegt, dass sie im Falle einer starken Verschmutzung oder Beschädigung austauschbar ist.

Vorzugsweise ist die Oberfläche des Identifikators 5 oder die Oberfläche der Schutzfolie so ausgelegt, dass deren jeweilige Oberfläche wasserabweisend, insbesondere schmutzabweisend ist. Ein Beispiel hierfür ist die Realisierung einer Oberfläche mit dem für sich bekannten Lotuseffekt. Zudem hat es sich bewährt, wenn die Identifikatoren 5 abwischbar sind, damit ein gegebenenfalls auf ihn vorgesehenes Muster von der Überladekamera 7 nach dem Entfernen einer Verschmutzung wieder besser erfasst werden kann.

Der Identifikator 5 bzw. die Identifikatoren 5 können eine Positionsinformation, insbesondere auf welcher Kante er angeordnet ist, und/oder eine Überladeinformation, insbesondere einen Sicherheitsbereich zum Rand 10 und/oder eine maximale Füllhöhe und/oder ein maximal zulässiges Beladegewicht und/oder eine Befüllstrategie, und/oder eine Ladebehälteridentifikationsinformation aufweisen, und die Positionsinformation und/oder Überladeinformation und/oder Ladebehälteridentifikationsinformation durch die Überladekamera auslesbar sein. Hierdurch können der Steuerung 6 weitere Informationen zur zumindest teilautomatisierten Steuerung des Überladevorgangs bereitgestellt werden. Auf diesen kann die Steuerung 6 dann den Überladevorgang zumindest teilautomatisiert steuern.

Insbesondere kann der Identifikator 5 bzw. die Identifikatoren 5 die Positionsinformation und/oder Überladeinformation und/oder Ladebehälteridentifikationsinformation durch ein Muster, insbesondere einen QR-Code, bereitstellen, welcher von der Überladekamera 7 ausgelesen wird. Vorzugsweise kennzeichnet der Identifikator 5 jedoch lediglich den Einfüllbereich 3 und weist ggf. eine Positionsinformation auf. Die Überladeinformation und/oder die Ladebehälteridentifikationsinformation stellt hier und vorzugsweise ein, insbesondere transportfahrzeugspezifischer, weiterer Identifikator 9 bereit, welcher weiter unten kurz beschrieben wird.

Nachdem das Transportfahrzeug 1 näher beschrieben wurde, soll nachfolgend die Erntemaschine 4 näher beschrieben werden. Eine vorschlagsgemäße Erntemaschine 4 ist in der Fig. 1 gezeigt. Hier handelt es sich um einen Mähdrescher. Alternativ kann es sich beispielsweise um einen Feldhäcksler handeln. Die Erntemaschine 4 erntet bei einer Erntefahrt Pflanzen vom Feld und verarbeitet diese mittels verschiedener Arbeitsorgane.

Die Erntemaschine 4 weist hier eine Überladevorrichtung 13 zum Befüllen eines Ladebehälters 2 eines Transportfahrzeuges 1 mit Erntegut, eine Überladekamera 7 zur Überwachung des Überladevorgangs und eine Steuerung 6 zum zumindest teilautomatisierten Steuern des Überladevorgangs auf. Diese können eine Überladevorrichtungsanordnung 14 bilden. Hier und vorzugsweise ist die Überladekamera 7 an der Überladevorrichtung 13, insbesondere dem Überladerohr 13b, angeordnet.

Im Rahmen des Überladevorgangs wird das verarbeitete Erntegut schließlich durch die Überladevorrichtung 13, hier ein durch einen Aktuator verstellbares, insbesondere schwenkbares, Überladerohr 13b, in einen Ladebehälter 2a ausgeworfen. Die Erntemaschine 4 kann einen Erntegutspeicher 15 aufweisen, in dem das Erntegut vor dem Auswerfen zwischengespeichert wird. Das Überladen von der Erntemaschine 4 erfolgt entweder im Stillstand oder während der Fahrt, insbesondere während der Erntefahrt. Zum Überladen während der Fahrt fährt das Transportfahrzeug 1 in der Regel rechts, links oder hinter der Erntemaschine 4 her.

Der Transport des Ernteguts von der Erntemaschine 4 zu einem Erntesilo, einem Erntespeicher o. dgl. wird in der Regel von dem bereits beschriebenen Transportfahrzeug 1 mit dem Ladebehälter 2a übernommen.

Die Steuerung 6 ist zur Erfassung mindestens eines einen Einfüllbereich 3 der Ladebehälteranordnung 2, insbesondere nach oben, kennzeichnenden Identifikatoren 5 mittels der Überladekamera 7ausgebildet. Hier und vorzugsweise wird mittels einer Mustererfassung nach den Identifikatoren 5 im Erfassungsbereich der Überladekamera 7 gesucht und dieselben erfasst, sowie basierend auf den erfassten Identifikatoren 5 die Lage und Ausrichtung des Einfüllbereichs 3 zur Erntemaschine 4, insbesondere der Auswurföffnung 13a der Überladevorrichtung 13 oder zu der Überladekamera 7, ermittelt.

Hier ist die Steuerung 6 zudem zur Erfassung des Füllgrades des Ladebehälters 2, insbesondere mittels der Überladekamera 7, insbesondere an verschiedenen Stellen desselben, ausgebildet. Hier steuert die Steuerung 6 den Überladevorgang insbesondere auch in Abhängigkeit von einem erfassten lokalen Füllgrad des Ladebehälters 2a.

Vorzugsweise weisen das Transportfahrzeug 1 und/oder die Erntemaschine 4 ein Fahrerassistenzsystem 16, 17auf. Ein Fahrerassistenzsystem 16, 17 steuert in der Regel Maschinenparameter des zugeordneten Transportfahrzeugs 1 und/oder der zugeordneten Erntemaschine 4 selbsttätig im Sinne eines zumindest teilautomatischen Betriebs um den Fahrer zu entlasten. Vorzugsweise ist die Steuerung 6 Teil des Fahrerassistenzsystems 16 des Transportfahrzeugs 1 und/oder Teil des Fahrerassistenzsystems 17 der Erntemaschine 4.

Zur besseren Erfassung der Identifikatoren 5, insbesondere in der Dunkelheit, kann das Transportfahrzeug 1 und/oder die Erntemaschine 4, insbesondere an der Überladevorrichtung 13, vorzugsweise dem Überladerohr 13b, eine Beleuchtung 7a zum Beleuchten der Ladebehälteranordnung 2, insbesondere der Identifikatoren 5, aufweisen.

Es kann am Fahrerplatz des Transportfahrzeugs 1 und/oder der Erntemaschine 4 ein Anzeigegerät angeordnet sein, welche den Überladevorgang, insbesondere ein Bild der Überladekamera 7, insbesondere live, anzeigt und auf diese Weise eine einfache Überwachung des teilautomatisierten oder automatisierten Überladevorgangs durch einen Fahrer erlaubt.

Die Erntemaschine 4 kann eine weitere Kamera 7b zur Erfassung von seitlich an dem Ladebehälter 2a angeordneten weiteren Identifikatoren 9 aufweisen. Diese zusätzliche Erfassung der weiteren Identifikatoren 9 kann das Steuern des Überladevorgangs weiter verbessern, da die seitlich am Ladebehälter 2a befindlichen Identifikatoren 9 während des Überladevorgangs üblicherweise einer geringen Staubentwicklung ausgesetzt sind. Das Steuern des Überladevorgangs kann durch die zusätzliche Erfassung dieser weiteren Identifikatoren 9 auf eine breitere Informationsbasis gestellt und so robuster ausgestaltet werden. Wie weiter oben bereits beschrieben, kann der weitere Identifikator 9 eine Überladeinformation und/oder die Ladebehälteridentifikationsinformation bereitstellen.

Die Überladekamera 7 und/oder die weitere Kamera 7b können als Stereokamera ausgebildet sein. Hierdurch ist eine Bestimmung der Relativposition zwischen Transportfahrzeug 1 und Erntemaschine 4 leichter möglich.

Hier und vorzugsweise ist die Steuerung 6 zum zumindest teilautomatisierten Steuern der Erntemaschine 4 bzw. der Verlademaschine und/oder des Transportfahrzeuges während des Überladevorgangs ausgebildet. Sie steuert vorzugsweise basierend auf den erfassten Identifikator 5 bzw. den erfassten Identifikatoren 5 das Transportfahrzeug 1 und/oder die Erntemaschine 4 zumindest teilweise.

Hierzu erfasst die Steuerung 6 vorzugsweise kontinuierlich den Identifikator 5 bzw. die Identifikatoren 5, 9 und bestimmt dadurch fortlaufend die Relativposition der Erntemaschine 4 zum Transportfahrzeug 1, insbesondere die Relativposition der Überladekamera 7 bzw. des Auswurföffnung 13a der Überladevorrichtung 13 zu der Einfüllbereich 3 des Ladebehälters 2.

Durch die zumindest Teilautomatisierung des Überladevorgangs wird insbesondere der Fahrer der Erntemaschine 4 erheblich entlastet, da der Ernteprozess an sich bereits regelmäßig die Aufmerksamkeit durch den Fahrer erfordert.

Mit "Teilautomatisierung" ist hier und vorzugsweise gemeint, dass die Erntemaschine 4 und/oder das Transportfahrzeug 1, ihre bzw. seine Maschinenparameter für den Überladevorgang weitgehend selbsttätig an die jeweils andere Maschine, also das Transportfahrzeug 1 an die Erntemaschine 4 und/oder die Erntemaschine 4 an das Transportfahrzeug 1, anpasst. Dabei kann es auch sein, dass die Erntemaschine 4 und/oder das Transportfahrzeug 1 die jeweiligen Maschinenparameter über entsprechende Anweisungen an den Fahrer, insbesondere über ein Fahrerassistenzsystem 16, 17, einstellen lässt. Vorzugsweise stellt die Steuerung 6 die Maschinenparameter jedoch selbsttätig ein. Solche Maschinenparameter können die Fahrgeschwindigkeit, die Fahrrichtung, Überladeparameter o. dgl. sein.

Vorzugsweise werden zumindest die Überladeparameter, insbesondere die Fördermenge der Überladevorrichtung 13, die Fördergeschwindigkeit des Ernteguts in der Überladevorrichtung 13, die Stellung des Überladerohres 13b, o. dgl. automatisch und/oder teilautomatisch geregelt und/oder gesteuert.

Zur zumindest teilautomatisierten Durchführung des Überladevorgangs ist zudem eine gute und zügige Kommunikation zwischen der Erntemaschine 4 und dem Transportfahrzeug 1 vorteilhaft. Hierzu können diese vorzugsweise direkt und/oder indirekt, insbesondere über eine Funkverbindung, vorzugsweise eine WLAN-Verbindung, miteinander kommunizieren.

Ein Ausführungsbeispiel des vorschlagsgemäßen Systems mit einem Transportfahrzeug 1 und mit einer Erntemaschine 4 ist in der Fig. 1 gezeigt. Das Transportfahrzeug 1 und die Erntemaschine 4 wurden vorstehend bereits einzeln umfassend beschrieben. Bei dem System sowie dem Verfahren zum Befüllen des Transportfahrzeugs 1 sind sie vorzugsweise, wie zuvor bereits beschrieben, ausgebildet. Es sei jedoch angemerkt, dass die Überladekamera 7 nicht zwangsweise an der Erntemaschine 4 und/oder der Verlademaschine angeordnet sein muss, sondern, dass grundsätzlich auch eine Anordnung der Überladekamera 7 am Transportfahrzeug 1, auch wenn nicht bevorzugt, vorgesehen sein kann.

Durch das vorschlagsgemäße Transportfahrzeug 1, die vorschlagsgemäße Erntemaschine 4, das vorschlagsgemäße System sowie das vorschlagsgemäße Verfahren lässt sich der Überladevorgang für die Fahrer von Transportfahrzeug 1 und/oder Erntemaschine 4 auf einfache Weise auch bei schlechten Lichtverhältnissen und starker Staubentwicklung zumindest teilautomatisiert steuern und damit für den oder die Fahrer vereinfachen.

### Bezugszeichen

- 1: Transportfahrzeug
- 1a: Zugmaschine
- 1b: Anhänger
- 2: Ladebehälteranordnung
- 2a: Ladebehälter
- 2b: Beladeeinrichtung
- 2c: Fördervorrichtung
- 3: Einfüllbereich
- 3a: Öffnung
- 3b: Beladeeinfüllbereich
- 4: Erntemaschine
- 5: Identifikator
- 6: Steuerung
- 7: Überladekamera
- 7a: Beleuchtung
- 8: Randstruktur
- 9: weiterer Identifikator
- 10: Rand
- 11: Ecke
- 12: Behälterboden
- 13: Überladevorrichtung
- 13a: Auswurföffnung
- 13b: Überladerohr
- 14: Überladevorrichtungsanordnung
- 15: Erntegutspeicher
- 16: Fahrerassistenzsystem Transportfahrzeug
- 17: Fahrerassistenzsystem Erntemaschine
- L: Längsseite

## Patentansprüche

1. Transportfahrzeug mit einer einen Ladebehälter (2a) aufweisenden Ladebehälteranordnung (2), wobei die Ladebehälteranordnung (2) einen Einfüllbereich (3) zum Befüllen des Ladebehälters (2) mit Erntegut durch eine Erntemaschine (4) oder Verlademaschine in einem Überladevorgang aufweist, und mit mindestens einem Identifikator (5), welcher zum zumindest teilautomatisierten Steuern des Überladevorgangs durch eine Steuerung (6) mittels einer Überladekamera (7) erfassbar ist,
**dadurch gekennzeichnet,**
**dass** an der Ladebehälteranordnung (2) in deren obenseitigen Endbereich der mindestens eine Identifikator (5) in der Art appliziert ist, dass er den Einfüllbereich (3) für die Steuerung (6) kennzeichnet und mittels der Überladekamera (7) erfassbar ist, wobei der Identifikator (5) bzw. die Indifikatoren (5) in oder auf Ecken des Einfüllbereichs der Öffnung (3) des Ladebehälters (2) angeordnet ist bzw. sind, wobei die Identifikatoren (5) ein Muster mit Hell-/Dunkel-Kontrast zur Erfassung mittels der Überladekamera (7) aufweisen, wobei die Identifikatoren (5) separat von der Ladebehälteranordnung (2) ausgebildet und an diesem, insbesondere lösbar, befestigt sind.

2. Transportfahrzeug nach Anspruch 1, **dadurch gekennzeichnet, dass** der Einfüllbereich (3) eine, insbesondere nach oben gerichtete, Öffnung (3a) des Ladebehälters (2a) ist und/oder dass die Ladebehälteranordnung (2) eine Beladevorrichtung (2b) aufweist und der Einfüllbereich ein Beladeeinfüllbereich (3b) der Beladevorrichtung (2b) ist.

3. Transportfahrzeug nach Anspruch 1 oder 2, **dadurch gekennzeichnet, dass** an der Ladebehälteranordnung (2) in deren obenseitigen Endbereich zwei Identifikatoren (5), insbesondere an einer ihrer Längsseiten (L), in der Art appliziert sind, dass sie den Einfüllbereich für die Steuerung (6) kennzeichnen und mittels der Überladekamera (7) erfassbar sind, vorzugsweise, dass an der Ladebehälteranordnung (2) in dessen obenseitigen Endbereich vier Identifikatoren (5), insbesondere je zwei an ihren Längsseiten (L), in der Art appliziert sind, dass sie den Einfüllbereich (3) für die Steuerung (6) kennzeichnen und mittels der Überladekamera (7) erfassbar sind.

4. Transportfahrzeug nach einem der vorhergehenden Ansprüche, **dadurch gekennzeichnet, dass** seitlich an dem Ladebehälter (2) weitere Identifikatoren (9) angeordnet sind.

5. Transportfahrzeug nach einem der vorhergehenden Ansprüche, **dadurch gekennzeichnet, dass** ein Identifikator (5) oder die Kombination aus zwei Identifikatoren (5) die Lage des Einfüllbereichs (3) relativ zum Identifikator (5) bzw. der Kombination der zwei Identifikatoren (5) angibt.

6. Transportfahrzeug nach Anspruch 2, **dadurch gekennzeichnet, dass** der Identifikator (5) bzw. die Identifikatoren (5) in oder auf Ecken des Beladeeinfüllbereichs der Beladeeinrichtung, angeordnet ist bzw. sind.

7. Transportfahrzeug nach einem der vorhergehenden Ansprüche, **dadurch gekennzeichnet, dass** die Identifikatoren (5) im Wesentlichen parallel und/oder senkrecht zum Boden (12) des Ladebehälters angeordnet sind, vorzugsweise, dass die Identifikatoren (5) flach ausgebildet sind und im Wesentlichen parallel und/oder senkrecht zum Boden (12) des Ladebehälters angeordnet sind.

8. Transportfahrzeug nach einem der vorhergehenden Ansprüche, **dadurch gekennzeichnet, dass** ein Identifikator (5) eine Positionsinformation, insbesondere auf welcher Kante er angeordnet ist, und/oder eine Überladeinformation, insbesondere einen Sicherheitsbereich zum Rand (10) und/oder eine maximale Füllhöhe und/oder ein maximal zulässiges Beladegewicht und/oder eine Befüllstrategie, und/oder eine Ladebehälteridentifikationsinformation umfasst, und dass die Positionsinformation und/oder Überladeinformation und/oder Ladebehälteridentifikationsinformation durch die Überladekamera (7) auslesbar ist.

9. Erntemaschine oder Verlademaschine mit einer Überladevorrichtung zum Befüllen eines Ladebehälters (2) eines Transportfahrzeugs (1) mit Erntegut in einem Überladevorgang, mit einer Überladekamera (7) zur Überwachung des Überladevorgangs und mit einer Steuerung (6) zum zumindest teilautomatisierten Steuern des Überladevorgangs, **dadurch gekennzeichnet, dass** die Steuerung (6) eingerichtet ist mindestens einen einen Einfüllbereich (3) einer Ladebehälteranordnung (2) in deren oberen Endbereich kennzeichnenden Identifikators (5) mittels der Überladekamera (7) zu erfassen, wobei an dem Ladebehälter (2) in dessen obenseitigen Endbereich der mindestens eine Identifikator (5) in der Art appliziert ist, dass er den Einfüllbereich (3) für die Steuerung (6) kennzeichnet und mittels der Überladekamera (7) erfassbar ist, wobei der Identifikator (5) bzw. die Indifikatoren (5) in oder auf Ecken des Einfüllbereichs der Öffnung (3) des Ladebehälters (2) angeordnet ist bzw. sind, wobei die Identifikatoren (5) ein Muster mit Hell-/Dunkel-Kontrast zur Erfassung mittels der Überladekamera (7) aufweisen, wobei die Identifikatoren (5) separat von der Ladebehälteranordnung (2) ausgebildet und an diesem, insbesondere lösbar, befes-. tigt sind.

10. Erntemaschine oder Verlademaschine nach Anspruch 9, **dadurch gekennzeichnet, dass** die Überladekamera (7) an der Überladevorrichtung (13), insbesondere dem Überladerohr (13b), angeordnet ist.

11. Erntemaschine oder Verlademaschine nach Anspruch 9 oder 10, **dadurch gekennzeichnet, dass** die Erntemaschine (4) eine weitere Kamera (7b) zur Erfassung von seitlich am Ladebehälter (2) angeordneten weiteren Identifikatoren (9) aufweist.

12. System mit einem Transportfahrzeug (1), wobei das Transportfahrzeug (1) eine einen Ladebehälter (2a) aufweisende Ladebehälteranordnung (2) mit einem Einfüllbereich (3) zum Befüllen des Ladebehälters (2) aufweist, und mit einer Erntemaschine (4) oder einer Verlademaschine, wobei die Erntemaschine (4) bzw. die Verlademaschine eine Überladevorrichtung (13) zum Befüllen des Ladebehälters (2) mit Erntegut in einem Überladevorgang aufweist, wobei eine Überladekamera (7) zur Überwachung des Überladevorgang und wobei eine Steuerung (6) zum zumindest teilautomatischen Steuern des Überladevorgangs vorgesehen ist,
**dadurch gekennzeichnet,**
**dass** die Ladebehälteranordnung (2) mindestens einen den Einfüllbereich (3) kennzeichnenden Identifikator (5) im oberen Endbereich aufweist und dass die Steuerung (6) mittels der Überladekamera (7) den Identifikator (5) erfasst und basierend auf dem erfassten Identifikator (5) das Transportfahrzeug (1) und/oder die Erntemaschine (4) zumindest teilautomatisiert steuert, wobei der Identifikator (5) bzw. die Indifikatoren (5) in oder auf Ecken des Einfüllbereichs der Öffnung (3) des Ladebehälters (2) angeordnet ist bzw. sind, wobei die Identifikatoren (5) ein Muster mit Hell-/Dunkel-Kontrast zur Erfassung mittels der Überladekamera (7) aufweisen, wobei die Identifikatoren (5) separat von der Ladebehälteranordnung (2) ausgebildet und an diesem, insbesondere lösbar, befestigt sind.

13. System nach Anspruch 12, **dadurch gekennzeichnet, dass** die Steuerung (6) basierend auf dem erfassten Identifikator (5) eine Relativposition der Öffnung (3) zu der Erntemaschine (4) oder Verlademaschine, insbesondere zu der Auswurföffnung (13a) der Überladevorrichtung (13) bestimmt.

14. Verfahren zum Befüllen eines Transportfahrzeugs mit Erntegut durch eine Erntemaschine (4) oder Verlademaschine mittels einer Überladevorrichtung (13), wobei das Transportfahrzeug (1) eine einen Ladebehälter (2a) aufweisende Ladebehälteranordnung mit einem nach oben gerichteten Einfüllbereich (3) zum Befüllen des Ladebehälters (2) aufweist,
**dadurch gekennzeichnet,**
**dass** die Ladebehälteranordnung (2) mindestens einen den Einfüllbereich (3) kennzeichnenden, von oben lesbaren Identifikatoren (5) aufweist und dass eine Steuerung (6) mindestens einen der Identifikatoren (5) mittels einer Überladekamera (7) erfasst und basierend auf dem erfassten Identifikator (5) das Transportfahrzeug (1) und/oder die Erntemaschine (4), insbesondere die Überladevorrichtung (13), zumindest teilautomatisiert steuert, wobei der Identifikator (5) bzw. die Indifikatoren (5) in oder auf Ecken des Einfüllbereichs der Öffnung (3) des Ladebehälters (2) angeordnet ist bzw. sind, wobei die Identifikatoren (5) ein Muster mit Hell-/Dunkel-Kontrast zur Erfassung mittels der Überladekamera (7) aufweisen, wobei die Identifikatoren (5) separat von der Ladebehälteranordnung (2) ausgebildet und an diesem, insbesondere lösbar, befestigt sind.

## Claims

1. A transport vehicle comprising a load container arrangement (2) having a load container (2a), wherein the load container arrangement (2) has a filling region (3) for filling the load container (2) with crop material by a harvesting machine (4) or loading machine in a transloading operation, and with at least one identifier (5) which can be detected by means of a transloading camera (7) for an at least partially automated control of the transloading operation by a control means (6),
**characterized in that**
the at least one identifier (5) is applied to the load container arrangement (2) in the top end region thereof in a manner such that it indicates the filling region (3) for the control means (6) and can be detected by means of the transloading camera (7), wherein the identifier (5) or the identifiers (5) is or are arranged in or on corners of the filling region of the opening (3) of the load container (2), wherein the identifiers (5) have a pattern with light/dark contrast for detection by means of the transloading camera (7), wherein the identifiers (5) are of separate construction to the load container arrangement (2) and are secured to it, in particular releasably secured to it.

2. The transport vehicle according to claim 1, **characterized in that** the filling region (3) is an in particular upwardly directed opening (3a) of the load container (2a) and/or **in that** the load container arrangement (2) has a loading apparatus (2b) and the filling region is a loading filling region (3b) of the loading apparatus (2b).

3. The transport vehicle according to claim 1 or claim 2, **characterized in that** two identifiers (5) are applied to the load container arrangement (2) in the top end region thereof, in particular at one of the longitudinal sides (L) thereof, in a manner such that they indicate the filling region for the control means (6) and can be detected by means of the transloading camera (7), preferably **in that** four identifiers (5) are applied to the load container arrangement (2) in the top end region thereof, in particular two at the respective longitudinal sides (L) thereof, in a manner such that they indicate the filling region (3) for the control means (6) and can be detected by means of the transloading camera (7).

4. The transport vehicle according to one of the preceding claims, **characterized in that** further identifiers (9) are arranged laterally on the load container (2).

5. The transport vehicle according to one of the preceding claims, **characterized in that** an identifier (5) or the combination of two identifiers (5) specifies the position of the filling region (3) relative to the identifier (5) or the combination of the two identifiers (5).

6. The transport vehicle according to claim 2, **characterized in that** the identifier (5) or the identifiers (5) is or are arranged in or on corners of the loading filling region of the loading apparatus.

7. The transport vehicle according to one of the preceding claims, **characterized in that** the identifiers (5) are arranged substantially parallel and/or perpendicular to the bottom (12) of the load container, preferably **in that** the identifiers (5) are flat in construction and are arranged substantially parallel and/or perpendicular to the bottom (12) of the load container.

8. The transport vehicle according to one of the preceding claims, **characterized in that** an identifier (5) includes positional information, in particular on which edge it is arranged, and/or transloading information, in particular a safety region relative to the edge (10) and/or a maximum filling height and/or a maximum permissible loading weight and/or a filling strategy and/or load container identification information, and **in that** the positional information and/or transloading information and/or load container identification information can be read out by the transloading camera (7).

9. A harvesting machine or loading machine with a transloading apparatus for filling a load container (2) of a transport vehicle (1) with crop material in a transloading operation, with a transloading camera (7) for monitoring the transloading operation and with a control means (6) for at least partially automated control of the transloading operation, **characterized in that** the control means (6) is adapted to detect at least one identifier (5) which indicates a filling region (3) of a load container arrangement (2) in the top end region thereof by means of the transloading camera (7), wherein the at least one identifier (5) is applied to the load container (2) in the top end region thereof in a manner such that it indicates the filling region (3) for the control means (6) and can be detected by means of the transloading camera (7), wherein the identifier (5) or the identifiers (5) is or are arranged in or on corners of the filling region of the opening (3) of the load container (2), wherein the identifiers (5) have a pattern with light/dark contrast for detection by means of the transloading camera (7), wherein the identifiers (5) are of separate construction to the load container arrangement (2) and are secured to it, in particular releasably secured to it.

10. The harvesting machine or loading machine according to claim 9 **characterized in that** the transloading camera (7) is arranged at the transloading apparatus (13), in particular the transloading pipe (13b).

11. The harvesting machine or loading machine according to claim 9 or claim 10, **characterized in that** the harvesting machine (4) has a further camera (7b) for the detection of further identifiers (9) arranged laterally on the load container (2).

12. A system with a transport vehicle (1), wherein the transport vehicle (1) has a load container arrangement (2) having a load container (2a) with a filling region (3) for filling the load container (2), and with a harvesting machine (4) or a loading machine, wherein the harvesting machine (4) or the loading machine has a transloading apparatus (13) for filling the load container (2) with crop material in a transloading operation, wherein a transloading camera (7) is provided for monitoring the transloading operation and wherein a control means (6) is provided for at least partially automated control of the transloading operation,
**characterized in that**
the load container arrangement (2) has at least one identifier (5) indicating the filling region (3) in the top end region thereof and **in that** the control means (6) detects the identifier (5) by means of the transloading camera (7) and controls the transport vehicle (1) and/or the harvesting machine (4) in an at least partially automated manner based on the detected identifier (5), wherein the identifier (5) or the identifiers (5) is or are arranged in or on corners of the filling region of the opening (3) of the load container (2), wherein the identifiers (5) have a pattern with light/dark contrast for detection by means of the transloading camera (7), wherein the identifiers (5) are of separate construction to the load container arrangement (2) and are secured to it, in particular releasably secured to it.

13. The system according to claim 12, **characterized in that**, based on the detected identifier (5), the control means (6) determines a relative position of the opening (3) with respect to the harvesting machine (4) or loading machine, in particular with respect to the discharge opening (13a) of the transloading apparatus (13).

14. A method of filling a transport vehicle with crop material by a harvesting machine (4) or loading machine by means of a transloading apparatus (13), wherein the transport vehicle (1) has a load container arrangement having a load container (2a) with an upwardly directed filling region (3) for filling the load container (2),
**characterized in that**
the load container arrangement (2) has at least one identifier (5) which can be read from above which indicates the filling region (3) and **in that** a control means (6) detects at least one of the identifiers (5) by means of a transloading camera (7) and controls the transport vehicle (1) and/or the harvesting machine (4), in particular the transloading apparatus (13), in an at least partially automated manner based on the detected identifier (5), wherein the identifier (5) or the identifiers (5) is or are arranged in or on corners of the filling region of the opening (3) of the load container (2), wherein the identifiers (5) have a pattern with light/dark contrast for detection by means of the transloading camera (7), wherein the identifiers (5) are of separate construction to the load container arrangement (2) and are secured to it, in particular releasably secured to it.

## Revendications

1. Véhicule de transport comprenant un agencement de récipient de chargement (2) comportant un récipient de chargement (2a), l'agencement de récipient de chargement (2) comportant une zone de déversement (3) pour remplir le récipient de chargement (2) avec du produit récolté, par l'intermédiaire d'une machine de récolte (4) ou d'une machine de chargement lors d'une opération de transfert, et comprenant au moins un identificateur (5) qui est détecté au moyen d'une caméra de transfert (7) pour la commande au moins partiellement automatisée de l'opération de transfert par l'intermédiaire d'une commande (6), **caractérisé en ce que** l'identificateur (5), au nombre d'au moins un, est appliqué sur l'agencement de récipient de chargement (2), dans la zone extrême supérieure de celui-ci, de façon à repérer la zone de déversement (3) pour la commande (6) et à être détectable au moyen de la caméra de transfert (7), l'identificateur (5) ou les identificateurs (5) étant placé(s) dans ou sur des coins de la zone de déversement de l'ouverture (3) du récipient de chargement (2), les identificateurs (5) comportant un motif à contraste clair/foncé en vue de la détection au moyen de la caméra de transfert (7), les identificateurs (5) étant réalisés séparément de l'agencement de récipient de chargement (2), et étant fixés à celui-ci, en particulier de façon amovible.

2. Véhicule de transport selon la revendication 1, **caractérisé en ce que** la zone de déversement (3) est une ouverture (3a) du récipient de chargement (2a), en particulier orientée vers le haut, et/ou **en ce que** l'agencement de récipient de chargement (2) comporte un dispositif de chargement (2b), et la zone de déversement est une zone de déversement de chargement (3b) du dispositif de chargement (2b).

3. Véhicule de transport selon la revendication 1 ou 2, **caractérisé en ce que** deux identificateurs (5) sont appliqués sur l'agencement de récipient de chargement (2), dans la zone extrême supérieure de celui-ci, en particulier sur un de ses grands côtés (L), de façon à repérer la zone de déversement pour la commande (6) et à être détectables au moyen de la caméra de transfert (7), de préférence **en ce que** quatre identificateurs (5) sont appliqués sur l'agencement de récipient de chargement (2), dans la zone extrême supérieure de celui-ci, en particulier deux sur chacun de ses grands côtés (L), de façon à repérer la zone de déversement (3) pour la commande (6) et à être détectables au moyen de la caméra de transfert (7).

4. Véhicule de transport selon une des revendications précédentes, **caractérisé en ce que** d'autres identificateurs (9) sont disposés latéralement sur le récipient de chargement (2).

5. Véhicule de transport selon une des revendications précédentes, **caractérisé en ce qu'**un identificateur (5) ou la combinaison de deux identificateurs (5) indique la position de la zone de déversement (3) par rapport à l'identificateur (5), respectivement de la combinaison des deux identificateurs (5).

6. Véhicule de transport selon la revendication 2, **caractérisé en ce que** l'identificateur (5), respectivement les identificateurs (5), est/sont respectivement disposé(s) dans ou sur des coins de la zone de déversement de remplissage de l'équipement de chargement.

7. Véhicule de transport selon une des revendications précédentes, **caractérisé en ce que** les identificateurs (5) sont disposés sensiblement parallèlement et/ou perpendiculairement au fond (12) du récipient de chargement, de préférence **en ce que** les identificateurs (5) sont de conception plate et sont disposés sensiblement parallèlement et/ou perpendiculairement au fond (12) du récipient de chargement.

8. Véhicule de transport selon une des revendications précédentes, **caractérisé en ce qu'**un identificateur (5) comprend une information de position, en particulier à propos de l'arête sur laquelle il est disposé, et/ou une information de transfert, en particulier à propos d'une zone de sécurité par rapport au bord (10) et/ou d'une hauteur de remplissage maximale et/ou d'un poids de chargement maximal admissible et/ou d'une stratégie de remplissage, et/ou une information d'identification de récipient de chargement, et **en ce que** l'information de position et/ou l'information de transfert et/ou l'information d'identification de récipient de chargement peuvent être lues par la caméra de transfert (7) .

9. Machine de récolte ou machine de chargement comprenant un dispositif de transfert pour remplir un récipient de chargement (2) d'un véhicule de transport (1) avec du produit récolté, lors d'une opération de transfert, comprenant une caméra de transfert (7) pour surveiller l'opération de transfert, et comprenant une commande (6) pour la commande au moins partiellement automatisée de l'opération de transfert, **caractérisée en ce que** la commande (6) est agencée pour détecter, au moyen de la caméra de transfert (7), au moins un identificateur (5) repérant une zone de déversement (3) d'un agencement de récipient de chargement (2), dans la zone extrême supérieure de celui-ci, l'identificateur (5), au nombre d'au moins un, étant appliqué sur le récipient de chargement (2), dans la zone extrême supérieure de celui-ci, de façon à repérer la zone de déversement (3) pour la commande (6) et pouvoir être détecté au moyen de la caméra de transfert (7), l'identificateur (5) ou les identificateurs (5) étant placé(s) dans ou sur des coins de la zone de déversement de l'ouverture (3) du récipient de chargement (2), les identificateurs (5) comportant un motif à contraste clair/foncé en vue de la détection au moyen de la caméra de transfert (7), les identificateurs (5) étant réalisés séparément de l'agencement de récipient de chargement (2), et étant fixés à celui-ci, en particulier de façon amovible.

10. Machine de récolte ou machine de chargement selon la revendication 9, **caractérisée en ce que** la caméra de transfert (7) est disposée sur le dispositif de transfert (13), en particulier sur la goulotte de transfert (13b).

11. Machine de récolte ou machine de chargement selon la revendication 9 ou 10, **caractérisée en ce que** la machine de récolte (4) comporte une autre caméra (7b) pour détecter d'autres identificateurs (9) disposés latéralement sur le récipient de chargement (2).

12. Système comprenant un véhicule de transport (1), le véhicule de transport (1) comportant un agencement de récipient de chargement (2) comportant un récipient de chargement (2a), avec une zone de déversement (3) pour remplir le récipient de chargement (2), et comprenant une machine de récolte (4) ou une machine de chargement, la machine de récolte (4), respectivement la machine de chargement, comportant un dispositif de transfert (13) pour remplir le récipient de chargement (2) avec du produit récolté, lors d'une opération de transfert, une caméra de transfert (7) étant prévue pour surveiller l'opération de transfert, et une commande (6) étant prévue pour la commande au moins partiellement automatisée de l'opération de transfert, **caractérisé en ce que** l'agencement de récipient de chargement (2) comporte dans la zone extrême supérieure au moins un identificateur (5) repérant la zone de déversement (3), et **en ce que** la commande (6) détecte l'identificateur (5) au moyen de la caméra de transfert (7) et, sur la base de l'identificateur détecté (5), commande le véhicule de transport (1) et/ou la machine de récolte (4) de manière au moins partiellement automatisée, l'identificateur (5) ou les identificateurs (5) étant placé(s) dans ou sur des coins de la zone de déversement de l'ouverture (3) du récipient de chargement (2), les identificateurs (5) comportant un motif à contraste clair/foncé en vue de la détection au moyen de la caméra de transfert (7), les identificateurs (5) étant réalisés séparément de l'agencement de récipient de chargement (2), et étant fixés à celui-ci, en particulier de façon amovible.

13. Système selon la revendication 12, **caractérisé en ce que** la commande (6) détermine, sur la base de l'identificateur (5) détecté, une position relative de l'ouverture (3) par rapport à la machine de récolte (4) ou à la machine de chargement, en particulier par rapport à l'ouverture d'éjection (13a) du dispositif de transfert (13).

14. Procédé pour remplir un véhicule de transport avec du produit récolté, par l'intermédiaire d'une machine de récolte (4) ou d'une machine de chargement, au moyen d'un dispositif de transfert (13), le véhicule de transport (1) comportant un agencement de récipient de chargement comprenant un récipient de chargement (2a) avec une zone de déversement (3) orientée vers le haut pour remplir le récipient de chargement (2), **caractérisé en ce que** l'agencement de récipient de chargement (2) comprend au moins un identificateur (5) qui repère la zone de déversement (3) et est lisible d'en haut, et **en ce qu'**une commande (6) détecte au moins un des identificateurs (5) au moyen d'une caméra de transfert (7) et, sur la base de l'identificateur détecté (5), commande le véhicule de transport (1) et/ou la machine de récolte (4), en particulier le dispositif de transfert (13), de manière au moins partiellement automatisée, l'identificateur (5) ou les identificateurs (5) étant placé(s) dans ou sur des coins de la zone de déversement de l'ouverture (3) du récipient de chargement (2), les identificateurs (5) comportant un motif à contraste clair/foncé en vue de la détection au moyen de la caméra de transfert (7), les identificateurs (5) étant réalisés séparément de l'agencement de récipient de chargement (2), et étant fixés à celui-ci, en particulier de façon amovible.
